# EUROPEAN PATENT APPLICATION

(11) **EP 2 410 800 A2**
(43) Date of publication of application: **25.01.2012**
(21) Application number: 11174647.5
(22) Date of filing: 20.07.2011
(51) Int. Cl.: H04W 68/12

(54) **Allowing a user to accept or deny a mobile terminated call from another radio access technology**

(30) Priority: 21.07.2010 US 366318 P; 03.11.2010 US 938548
(71) Applicant: Telefonaktiebolaget LM Ericsson (publ), 164 83 Stockholm (SE)
(72) Inventor: Jang, Ke-Chi, Plano, TX Texas 75025 (US); Bienn, Marvin, Dallas, TX Texas 75252 (US); Brombal, David, Plano, TX Texas 75024 (US); De Franca Lima, Octavio Jose, The Colony, TX Texas 75056 (US)
(74) Representative: HOFFMANN EITLE

(57) **Abstract**

A user entity (UE) of a wireless telecommunications network for a user comprises an interface that receives packet oriented sessions and circuit switched sessions. The UE comprises a processor in communication with the interface that produces an indication to alert the user while a packet oriented session is established at the terminal that a circuit switched session is being requested to be established with the terminal. The UE comprises an input in communication with the processor for the user to instruct the processor to accept the request and establish the circuit switched session; otherwise the processor does not accept the request and does not establish the circuit switched session with the terminal. A method of a UE of a wireless telecommunications network for a user. A mobile switching system (MSC) of a wireless telecommunications network.

## Description

### CROSS-REFERENCE TO RELATED APPLICATIONS

This application claims the benefit of U.S. Provisional Application No. 61/366,318, filed on July 21, 2010, the disclosure of which is incorporated herein by reference.

### TECHNICAL FIELD

The present invention is related to a user equipment (UE) of a wireless telecommunications network for a user that receives packet oriented sessions and circuit switched sessions and allows the user to reject a request to establish a circuit switched session while a packet oriented session is established. (As used herein, references to the "present invention" or "invention" relate to exemplary embodiments and not necessarily to every embodiment encompassed by the appended claims.) More specifically, the present invention is related to a UE of a wireless telecommunications network for a user that receives packet oriented sessions and circuit switched sessions and allows the user to reject a request to establish a circuit switched session while a packet oriented session is established and which displays for the user a calling number associated with the request to establish the circuit switched session which is displayed on a display.

### BACKGROUND

This section is intended to introduce the reader to various aspects of the art that may be related to various aspects of the present invention. The following discussion is intended to provide information to facilitate a better understanding of the present invention. Accordingly, it should be understood that statements in the following discussion are to be read in this light, and not as admissions of prior art.

For cdma circuit-switched operation, the call termination mobile receives the called party number after the traffic channel has been established. The mobile displays the calling party number to the subscriber when the mobile alerts the subscriber of an incoming voice call. Once alerted and the calling party number is displayed, the subscriber can accept or reject the voice call.

A single-radio multi-mode mobile (SRMMM)- is a mobile capable of supporting cdma circuit-switched operations over a circuit-switched radio access technology (RAT) and packet-data operations over one or more packet-data radio access technologies (e.g., HRPD, LTE). A SRMMM can only be attached to one radio access technology at a time.

When a SRMMM (e.g., capable of cdma circuit-switched operation and packet-data opertation on LTE) is attached to a packet-data RAT (e.g., LTE) it can receive cdma circuit-switched messaging using a specified tunneling protocol (e.g., Generic Circuit Services Notification Application (GCSNA) ). A common reason for tunneling cdma circuit-switched messaging to a SRMMM attached to a packet-data RAT is to trigger the SRMMM to detach from the packet-data RAT and attach to the circuit-switched RAT for the purpose of accepting a voice call.

When the SRMMM, attached to a packet-data RAT, receives a tunneled cdma circuit-switched page messaging, the SRMMM detaches from the packet-data RAT and attaches to a designated circuit-switch RAT. Once attachment has been established, the mobile displays the calling party number to the subscriber when the mobile alerts the subscriber of an incoming voice call. Only at this point can the subscriber reject the voice call.

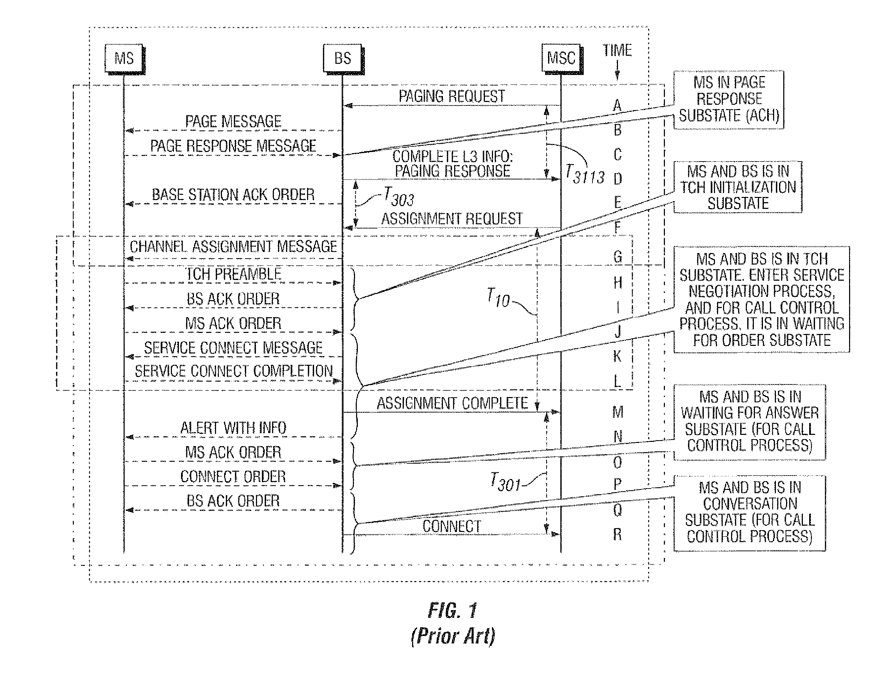

Figure 1 shows the normal MS terminated call flow, where both MS and BS progress from Idle State through to Traffic Channel State.

In this normal MS terminated call flow, the following are the procedures breakdown from the air interface perspective:

• BS page the mobile and MS respond to the page

• BS sends channel assignment message (e.g. ECAM) to assign traffic channel to MS

• After acquiring the ECAM on the FL common channel, the MS camps on the traffic channel based on the info provided by ECAM. MS goes to TCH initialization substate.

• After traffic channel (both FL and RL) are established, MS/BS perform service negotiation procedures while in TCH substate. As for Call Control procedures, the MS is in Waiting for Answer order substate. The BS sends Alert With Info after the service negotiation procedure completed.

• After AWI is received, as for call control procedure, the MS moves into Waiting for answer substate. The users answer the call and the MS sends Connect order and the MS moves to Conversation substate.

For eCSFB, the steps shown in the insert box in Figure 1 are replaced with 1x UHDM (Universal Handoff Direction Message) and 1x Handoff Complete Message. The reason UHDM is used is because UHDM contains all the necessary information contained in ECAM (which is for initial traffic channel establishment) and other information required to establish a call (information needed after the TCH initialization substate).

In regard to problems with existing solutions, the SRMMM that attached to a packet-data RAT (e.g. LTE) may be on a critical active packet data session. According to the current existing method, after the SRMMM receives the 1 x page message through the tunnel, the SRMMM will have to proceed to fall back to 1x network's traffic channel without knowing the calling party number. The calling party number will display to the user only after the SRMMM has acquired the 1x traffic channel and only then can the user accept or reject the call according to the existing method.

With the stated existing method, the user may have to interrupt the important critical data session. It is also an inconvenience for the SRMMM that it needs to fall back to the 1x network every time it receives a 1x page message to allow user to determine if she is going to accept or reject the call, It is a waste of network resource.

There is a unique challenge on how to solve this issue; the following are the reasons for the difficulty:

• Need to have minimum impact to existing 1x L3 state machine

• Minimum changes on how the MS is to operate compare to existing operation

• Minimum changes to the network side

• Mechanism that can provide notification to the user regarding the incoming page and the calling party number and allows the user to be able to reject the incoming 1x call without fall back to 1x system.

As indicated in Figure 1, the Alert with Information message should be sent after the MS acquired the 1x traffic channel (i.e. after fall back to 1x network). But to address the issue of the user not being able to see the calling party number (before switch the call to 1xRTT), the invention is to allow user to be notified (while MS is still camp on LTE) about the incoming 1 x page with Calling Party Number displayed.

The benefits of this invention are that:
it does not waste 1x circuit-switched traffic channel resources for voice calls that will be rejected by the MS user, and
that when involved in critical packet-data applications the user can decide whether to accept the 1x voice call and risk losing the packet-data session or to reject the 1x voice call, ensuring the packet-data application is uninterrupted.

### BRIEF SUMMARY OF THE INVENTION

The present invention pertains to a user equipment (UE) of a wireless telecommunications network for a user. The UE comprises an interface that receives packet oriented sessions and circuit switched sessions. The UE comprises a processor in communication with the interface that produces an indication to alert the user while a packet oriented session is established at the terminal that a circuit switched session is being requested to be established with the terminal. The UE comprises an input in communication with the processor for the user to instruct the processor to accept the request and establish the circuit switched session, otherwise the processor does not accept the request and does not establish the circuit switched session with the terminal.

The present invention pertains to a method of a UE of a wireless telecommunications network for a user. The method comprises the steps of receiving at an interface packet oriented sessions and circuit switched sessions. There is the step of producing with a processor in communication with the interface an indication to alert the user while a packet oriented session is established at the terminal that a circuit switched session is being requested to be established with the terminal. There is the step of receiving at an input in communication with the processor instructions by the user for the processor to accept the request and establish the circuit switched session, otherwise the processor does not accept the request and does not establish the circuit switched session with the terminal.

The present invention pertains to a mobile switching system (MSC) of a wireless telecommunications network. The MSC comprises an interface which receives a clear message from a UE which denies a request to establish a circuit-switched session while the UE has an established packet oriented session. The MSC comprises a processor which clears all resources associated with the current switched session.

The present invention pertains to a method of an MSC of a wireless telecommunications network. The method comprises the steps of receiving at an interface a clear message from a UE which denies a request to establish a circuit-switched session white the UE has an established packet oriented session. There is the step of clearing with a processor all resources associated with the current switched session.

### BRIEF DESCRIPTION OF THE DRAWINGS

In the accompanying drawings, the preferred embodiment of the invention and preferred methods of practicing the invention are illustrated in which:

Figure 1 shows a normal MS Terminated call procedure.

Figure 2 shows a representation of a call procedure regarding coexisting IWS and BSC.

Figure 3 shows a representation of a call procedure regarding an IWS stand alone case.

Figure 4 shows a representation of a call procedure where a user does not accept voice call page sent through tunnel.

Figure 5 is a block diagram of a user entity of the present invention.

Figure 6 is a block diagram of a mobile switching system of the present invention.

### DETAILED DESCRIPTION OF THE INVENTION

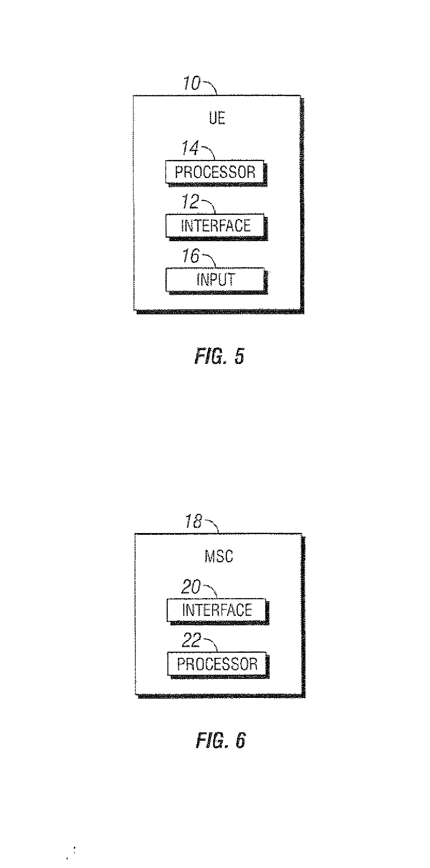

Referring now to the drawings wherein like reference numerals refer to similar or identical parts throughout the several views, and more specifically to figure 5 thereof, there is shown a UE 10 of a wireless telecommunications network for a user. The UE 10 comprises an interface 12 that receives packet oriented sessions and circuit switched sessions. The UE 10 comprises a processor 14 in communication with the interface 12 that produces an indication to alert the user while a packet oriented session is established at the terminal that a circuit switched session is being requested to be established with the terminal. The UE 10 comprises an input 16 in communication with the processor 14 for the user to instruct the processor 14 to accept the request and establish the circuit switched session; otherwise the processor 14 does not accept the request and does not establish the circuit switched session with the terminal.

The processor 14 may produce an identifier which recognizes an identity associated with the circuit switched session. After the request is received and a predetermined time has passed and the processor 14 does not receive an accept signal from the input 16 to accept the circuit-switched session, the processor 14 may reject the request to establish the circuit-switched signal. The processor 14 may reject the request to establish the circuit-switched session when the processor 14 receives from the input 16 a reject signal to reject the request.

The UE 10 may include a display and the identifier includes a calling number associated with the request to establish the circuit switched session which is displayed on the display. The UE 10 may include an audio indicator in communication with the processor 14, and wherein the processor 14 produces an audio signal which causes the audio indicator to produce an audio indication that there is the request to establish the circuit-switched session. When the processor 14 rejects the request, the processor 14 may produce a release message which is sent from the interface 12 to the network to cause a mobile switching system (MSC) 18 to clear all resources associated with the circuit-switched session.

The present invention pertains to a method of a UE 10 of a wireless telecommunications network for a user. The method comprises the steps of receiving at an interface 12 packet oriented sessions and circuit switched sessions. There is the step of producing with a processor 14 in communication with the interface 12 an indication to alert the user while a packet oriented session is established at the terminal that a circuit switched session is being requested to be established with the terminal. There is the step of receiving at an input 16 in communication with the processor 14 instructions by the user for the processor 14 to accept the request and establish the circuit switched session, otherwise the processor 14 does not accept the request and does not establish the circuit switched session with the terminal.

There may be the step of the processor 14 producing an identifier which recognizes an identity associated with the circuit switched session. There may be the step of the processor 14 rejecting the request to establish the circuit-switched signal after the request is received and a predetermined time has passed and the processor 14 does not receive an accept signal from the input 16 to accept the circuit-switched session. There may be the step of the processor 14 rejecting the request to establish the circuit-switched session when the processor 14 receives from the input 16 a reject signal to reject the request.

The identifier may include a calling number associated with the request to establish the circuit switched session and there may be the step of displaying on a display the calling number. There may be an audio indicator in communication with the processor 14, and there may be the step of the processor 14 producing an audio signal which causes the audio indicator to produce an audio indication that there is the request to establish the circuit-switched session. The processor 14 rejecting step may include the step of the processor 14 producing a release message which is sent from the interface 12 to the network to cause an MSC 18 to clear all resources associated with the circuit-switched session.

The present invention pertains to an MSC 18 of a wireless telecommunications network, as shown in figure 6. The MSC 18 comprises an interface 20 which receives a clear message from a UE 10 which denies a request to establish a circuit-switched session while the UE 10 has an established packet oriented session. The MSC 18 comprises a processor 22 which clears all resources associated with the current switched session.

The present invention pertains to a method of an MSC 18 of a wireless telecommunications network. The method comprises the steps of receiving at an interface 20 a clear message from a UE 10 which denies a request to establish a circuit-switched session while the USE 10 has an established packet oriented session. There is the step of clearing with a processor 22 all resources associated with the current switched session.

In the operation of the invention, the following is a highlight of the present invention, the detail steps for each scenario is shown afterwards.

1. Sends Calling Party Information alone with 1x page message through S102 (tunnel between MME and IWS). This is possible because Page Request Message defined in A.S0008/9 is able to carry CPI information. There are two options:

a. Include CPI in the header part of GCSNA1xCircuitService (GPM) message, or include CPI in the TLAC part of this message. A one bit indicator may be added in GCSNA I xCircuitService message to indicate a GPM is sent.

b. Send GCSNA 1xCircuitService (FNM) alone with GCSNA1xCircuitServiee (GPM). FNM (Feature Notification Message) is a 1x signaling message that can be sent by BS in any substate while BS/MS are in idle state. FNM can also include multiple information records in a message. For example FNM can carry CPI, Signal and Display information records in one message.

2. Add a minor requirement to MS such that when MS receive 1x Page through GCSNA protocol, instead of sending Page Response Message right away, a timer is activated that allow user to view the received CPI. If the timer expires, and there is no specific action from user, the Page Response Message will then be sent.

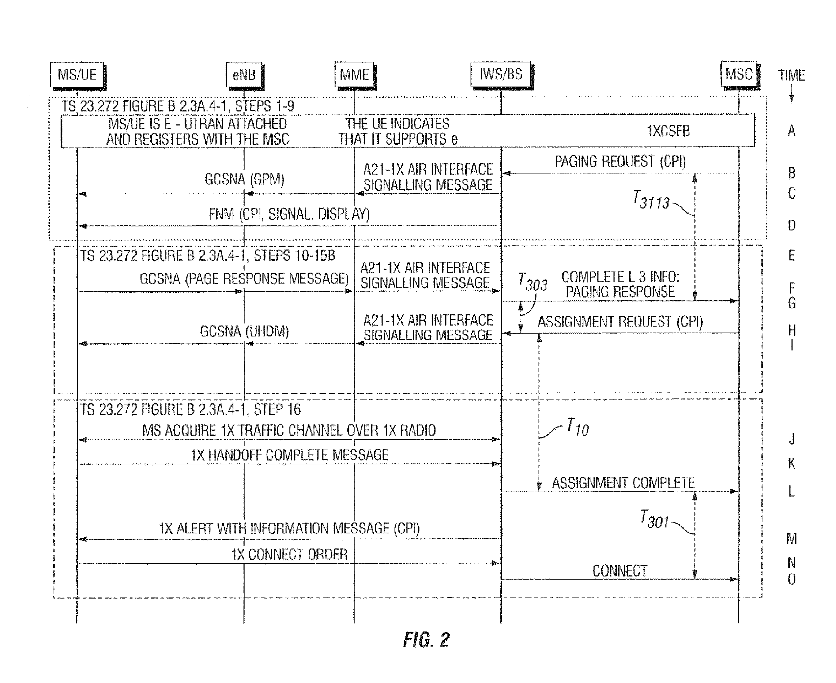

3. If IWS and BSC are co-located, the call flow in Figure 2 is the preferred method to allow user to see the calling party number before switching the call from LTE to 1 x RTT. Again, the IWS can use GCSNA protocol to convey the calling party number alone with the General Page Message or, the IWS can send GCSNA (Feature Notification Message with calling party number) alone with GCSNA (General Page Message). Also, the Assignment Request message in step h is used to trigger IWS sending GCSNA (Universal Handoff Direction Message) to MS/UE 10.

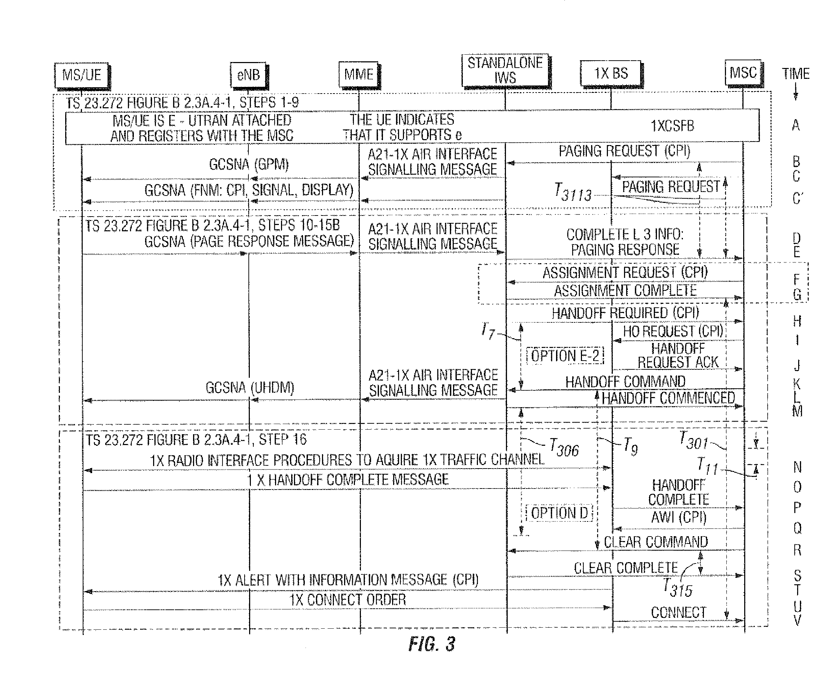

4. If IWS and BSC are not co-located, the call flow is described in Figure 3. The following are the additional requirements to support this scenario:

a. Complete Layer 3 Information message (Page Response) when received from IWS can be enhanced as:

i. define that when MSC 18 receives the Complete Layer 3 Information message (Page Response), the MSC 18 should not send Assignment Request message to IWS. In this case, the steps f and g in figure 3 are not needed or become optional.

ii. Add a new IE to Complete Layer 3 Information message that indicates this message comes from IWS. So when IWS forwards Page Response message to MSC 18, MSC 18 does not send Assignment Request message to IWS. This new IE can also contain some specific information to assist MSC 18 to prepare handoff the MS to target BS.

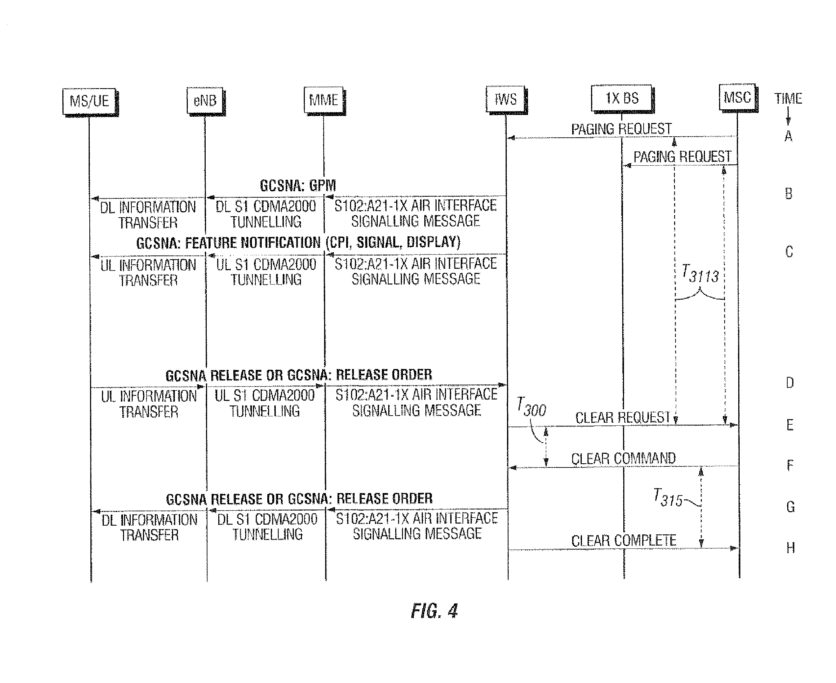

5. In case the user denies the 1x page while the timer is still active, instead of sending Page Response Message, the MS sends release information through tunnel to IWS to release the resources associate with this call. The release sent by MS can be either a GCSNA release message or GCSNA (lx Release Order). Figure 4 provide the call flow for the scenario in case user denies the call page from 1x. In this case, the UE 10 may send a GCSNA Release message to IWS, then this release message is forwarded to MSC 18 to clean up resources setup for this call.

If IWS and BS are co-located - Page Acceptance case

If BS and IWS are co-located, the changes can be minimized in air interface 12 and IOS to allow MS to display the calling party number to the user before the user decides to proceed further with the call or not. The purpose of the enhancement is to provide the user a chance to see who is calling and gives the user a chance to deny the CSFB. The following are the only differences compared to normal 1x call setup for the successful case (see figure 2):

• Sends GCSNA (FNM) alone with GCSNA (GPM) over S102 (alternatively, instead of sending GCSNA (FNM), the IWS can include CPI in the header part of GCSNA message that contain 1x GPM)

• Giving user a chance to view the calling party number when FNM is received before GCSNA (PRM) is sent by MS.

• BS/IWS sends GCSNA (UHDM) when Assignment Request message is received from MSC 18. The BS/IWS sends Assignment Complete message to MSC 18 when 1x Handoff Completion message is received from M.S.

Assumption:

• Since Assignment Request message does not contain information such as Service Configuration information needed to construct the UHDM, it is assumed that BS/IWS is able to provide such information to construct the UHDM.

Consideration on Complete Layer 3 Information message:

There may be a need to distinguish Complete L3 Information message sent by IWS or BS since MSC 18 may need to perform different response to the complete L3 Information message (Page Message) compare to normal procedures defined. So, a new IE might be needed to identify that this message is sent from IWS. The following can be the structure of this new IE (i.e. IWS Specific Parameters IE):

• IWS Specific Parameter IE (1-bit: (Stand alone IWS)). When "Stand alone IWS" bit is set to '0', it is indicated that the IWS and BS are co-located; otherwise, the IWS is a stand-alone IWS.

IWS Specific Parameter IE may also contain extra fields to indicate specific action MSC 18 needs to take to support the call setup.

If IWS is not co-located with BS - Page Acceptance case

In some implementation scenarios, IWS might be a stand-alone entity which links to multiple BS through M.SC 18. After IWS receives the Page Response message through S102 interface 12, a hand handoff like procedure needs to be performed by IWS such that MS can connect to the assigned BS through 1x UHDM. In this scenario, the 1x UHDM acts as a channel assignment message, Service negotiation related function and handoff function.

As shown in figure 3, the step 'f' and 'g' between MSC 18 and IWS are redundant, because there is no assignment procedures triggered between IWS and MS when IWS receives the assignment Request message. There are two options to allow MSC 18 not to send an "Assignment Request message when Complete Layer 3 Information message (Page Response) is received from IWS:

1. Define that when MSC 18 receives the Complete Layer 3 Information message (Page Response), the MSC 18 should not send Assignment Request message to IWS, or

2. Add a new IE to Complete Layer 3 Information message that indicates this message comes from IWS. So when IWS forwards Page message to MSC 18, MSC 18 does not send Assignment Request message to IWS.

Page Denial case

When the mobile station receives the Page message and Feature Notification through GCSNA protocol, the calling party number is displayed with a signal tone played to alert user that there is an incoming 1x page. The user may decide not to accept the incoming 1x page. In this case, either GCSNARelease message or 1x Release order is sent through GCSNA protocol (See figure 4).

At this point of time, the MS state machine is still in idle. According to C.S0005, the MS, while in idle, can only send Release order under two conditions (i.e. to release due to sent Origination message or release due to power off). So, it is suggested that when user denies the 1x page, the GCSNA protocol send a GCSNARelease message (new GCSNA message) to IWS as the preferable method.

If IWS receives GCSNARelease message (or 1x Release order) instead of Page Response message, the IWS sends Clear Request message to MSC 18 to clear the resources associate with this call.

Abbreviations

TCH - Traffic Channel

FL - Forward Link

RL - Reverse Link

MS - Mobile Station

BS - Base Station

AWI - Alert With Info

eCSFB - enhanced Circuit Switched Fallback

UHDM - Universal Handoff Direction Message

ECAM - Extended Channel. Assignment message

SRMMM - Single Radio Multi-Mode Mobile

LTE - Long Term Evolution

IWS - Interworking System

MME - Mobility Management Entity

GPM - General Page Message

GCSNA - Generic Circuit Services Notification Application

TLAC - Tunnel Link Access Control

FNM - Feature Notification Message

1xRTT - 1 Times Radio Transmission Technology

UE - User Equipment

MSC - Mobile Switching System

IOS - InterOperability Standard

PRM - Page Response Message

BSC - Base Station Controller

TSG - Technical Specification Group

CDMA - Code Division Multiple Access

HRPD - High Rate Packet Data

CPI - Calling Party Information

Although the invention has been described in detail in the foregoing embodiments for the purpose of illustration, it is to be understood that such detail is solely for that purpose and that variations can be made therein by those skilled in the art without departing from the spirit and scope of the invention except as it may be described by the following claims.

## Claims

1. A user equipment (UE) of a wireless telecommunications network for a user comprising:
an interface that receives packet oriented sessions and circuit switched sessions;
a processor in communication with the interface that produces an indication to alert a user while a packet oriented session is established at the terminal that a circuit switched session is being requested to be established with the terminal; and
an input in communication with the processor for the user to instruct the processor to accept the request and establish the circuit switched session, otherwise the processor does not accept the request and does not establish the circuit switched session with the terminal.

2. The USE as described in claim 1 wherein the processor produces an identifier which recognizes an identity associated with the circuit switched session.

3. The UE as described in claim 2 wherein after the request is received and a predetermined time has passed and the processor does not receive an accept signal from the input to accept the circuit-switched session, the processor rejects the request to establish the circuit-switched signal.

4. The UE as described in claim 2 wherein the processor rejects the request to establish the circuit-switched session when the processor receives from the input a reject signal to reject the request.

5. The UE as described in claim 2 including a display and the identifier includes a calling number associated with the request to establish the circuit switched session which is displayed on the display.

6. The UE as described in claim 2 including an audio indicator in communication with the processor, and wherein the processor produces an audio signal which causes the audio indicator to produce an audio indication that there is the request to establish the circuit-switched session.

7. The UE as described in claim 2 wherein when the processor rejects the request, the processor produces a release message which is sent from the interface to the network to cause a Mobile Switching System (MSC) to clear all resources associated with the circuit-switched session.

8. A method of a user equipment (UE) of a wireless telecommunications network comprising the steps of:
receiving at an interface packet oriented sessions and circuit switched sessions;
producing with a processor in communication with the interface an indication to alert a user while a packet oriented session is established at the terminal that a circuit switched session is being requested to be established with the terminal; and
receiving at an input in communication with the processor instructions by the user for the processor to accept the request and establish the circuit switched session, otherwise the processor does not accept the request and does not establish the circuit switched session with the terminal.

9. The method as described in claim 8 including the step of the processor producing an identifier which recognizes an identity associated with the circuit switched session.

10. The method as described in claim 8 including the step of the processor rejecting the request to establish the circuit-switched signal after the request is received and a predetermined time has passed and the processor does not receive an accept signal from the input to accept the circuit-switched session.

11. The method as described in claim 8 including the step of the processor rejecting the request to establish the circuit-switched session when the processor receives from the input a reject signal to reject the request.

12. The method as described in claim 8 wherein the identifier includes a calling number associated with the request to establish the circuit switched session and including the step of displaying the calling number.

13. The method as described in claim 8 including an audio indicator in communication with the processor, and including the step of the processor producing an audio signal which causes the audio indicator to produce an audio indication that there is the request to establish the circuit-switched session.

14. The method as described in claim 11 wherein the processor rejecting step includes the step of the processor producing a release message which is sent from the interface to the network to cause a Mobile Switching System (MSC) to clear all resources associated with the circuit-switched session.

15. A Mobile Switching System (MSC) of a wireless telecommunications network comprising:
an interface which receives a clear message from a user equipment (UE) which denies a request to establish a circuit-switched session while the UE has an established packet oriented session; and
a processor which clears all resources associated with the current switched session.

16. A method of a mobile switching system (MSC) of a wireless telecommunications network comprising the steps of:
receiving at an interface a clear message from a user equipment (UE) which denies a request to establish a circuit-switched session while the UE has an established packet oriented session; and
learning with a processor all resources associated with the current switched session.
